(19) Europäisches Patentamt
European Patent Office
Office européen des brevets

(11) EP 2 687 496 A1

# (12) EUROPÄISCHE PATENTANMELDUNG

(43) Veröffentlichungstag:
**22.01.2014 Patentblatt 2014/04**

(51) Int Cl.:
***C04B 22/14*** *(2006.01)* ***C04B 28/14*** *(2006.01)*
***C04B 40/00*** *(2006.01)* ***C01F 11/46*** *(2006.01)*

(21) Anmeldenummer: **12177315.4**

(22) Anmeldetag: **20.07.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF Construction Polymers GmbH**
**83308 Trostberg (DE)**

(72) Erfinder:
- **Loges, Niklas**
  **84518 Garching an der Alz (DE)**
- **Gehrig, Uwe**
  **83368 St. Georgen (DE)**
- **Schinabeck, Michael**
  **83352 Altenmarkt (DE)**
- **Dierschke, Frank**
  **55276 Oppenheim (DE)**
- **Braeu, Michael**
  **83308 Trostberg (DE)**
- **Nicoleau, Luc**
  **83352 Altenmarkt an der Alz (DE)**

## (54) Synthese und Anwendung von Gips-Seeding-Material

(57) Die Erfindung betrifft ein Verfahren zur Herstellung von Calciumsulfat-Dihydrat, wobei eine wasserlösliche Calciumverbindung, mit einer wasserlöslichen Sulfatverbindung, in Gegenwart von Wasser und einem säuregruppenhaltigen Polymer umgesetzt wird, wobei das säuregruppenhaltige Polymer spezielle Polyethergruppen umfasst. Weiterhin wird Calciumsulfat-Dihydrat, herstellbar nach dem erfindungsgemäßen Verfahren sowie dessen Verwendung zur Herstellung einer Gipskartonplatte offenbart.

EP 2 687 496 A1

## Beschreibung

Die vorliegende Erfindung betrifft ein Verfahren zur Herstellung von Calciumsulfat-Dihydrat sowie dessen Verwendung zur Herstellung einer Gipskartonplatte.

Der Begriff Gips wird im allgemeinen Sprachgebrauch sowohl für die Verbindung Calciumsulfat-Dihydrat als auch für das aus dieser Verbindung bestehende Gestein und den entsprechenden Baustoff, Calciumsulfat-Halbhydrat oder Anhydrit, verwendet. Calciumsulfat-Dihydrat kommt in der Natur in großen Lagerstätten vor, die beim Eindampfen von Meeren in der Erdgeschichte entstanden sind. Weiterhin wird Calciumsulfat-Dihydrat als Produkt oder Nebenprodukt bei verschiedenen Prozessen in der Industrie gewonnen, beispielsweise der Rauchgas-Entschwefelung, bei der Schwefeldioxid aus den Verbrennungsabgasen der Kohlekraftwerke mittels einer Calciumcarbonat- oder Calciumhydroxid-Aufschlämmung abgereichert wird.

Beim Erhitzen auf Temperaturen von 120-130 °C gibt das Calciumsulfat-Dihydrat einen Teil seines Kristallwassers ab und geht in das Calciumsulfat-Halbhydrat über. Vermischt man das Halbhydrat mit Wasser, dann bildet sich innerhalb von kurzer Zeit unter Erhärten der Masse das Dihydrat zurück.

Calciumsulfat-Halbhydrat ist ein wichtiger Baustoff zur Herstellung von Mörteln, Estrichen, Gussformen und insbesondere Gipskartonplatten. Calciumsulfat-Bindemitteln werden aus technischen Erfordernissen heraus erheblich variierende Eigenschaften abverlangt. Insbesondere hinsichtlich der Verarbeitungszeit und dem Zeitpunkt des Versteifens müssen die Bindemittel im Zeitraum von wenigen Minuten bis mehreren Stunden variabel einstellbar sein. Um diesen Anforderungen gerecht zu werden, ist der Einsatz von abbinderegulierenden Zusätzen notwendig.

Von maßgeblicher Bedeutung ist die Beschleunigung des Abbindens bei der Herstellung von Gipsbauplatten, insbesondere Gipskartonplatten. Weltweit werden derzeit jährlich über 8.000 Mio. $m^2$ Gipskartonplatten hergestellt. Die Herstellung von Gipskartonplatten ist lange bekannt. Sie ist beispielsweise beschrieben in dem US Patent 4,009,062. Der eingesetzte abbindefähige Gipsbrei aus Calciumsulfat-Halbhydrat und Wasser wird typischerweise in einem Durchlaufmischer mit hoher Drehzahl erzeugt, auf eine Kartonbahn kontinuierlich aufgetragen und mit einem zweiten Karton abgedeckt. Die beiden Kartonbahnen werden als Sicht- bzw. Rückseitenkarton bezeichnet. Der Plattenstrang bewegt sich dann auf einem sogenannten Abbindeband, wobei am Ende des Abbindebandes eine fast vollständige Umwandlung der abbindefähigen Calciumsulfat-Phasen in Calciumsulfat-Dihydrat stattgefunden haben muss. Nach dieser Aushärtung wird die Bahn in Platten vereinzelt und das noch in den Platten vorhandene Wasser wird in beheizten Mehretagentrocknern entfernt.

Derartige Gipskartonplatten werden im Innenausbau für Decken und Wände im großen Umfang verwendet.

Um der steigenden Nachfrage gerecht zu werden sowie zur Minimierung der Produktionskosten, werden ständig Anstrengungen unternommen, den Herstellungsprozess zu verbessern. Moderne Anlagen zur Fabrikation von Gipsbauplatten können Fertigungsgeschwindigkeiten von bis zu 180 Meter pro Minute erreichen. Die größtmögliche Auslastung der Anlagenkapazität ist nur durch den Einsatz von hochwirksamen Beschleunigern möglich. Die Abbindezeit des Calciumsulfat-Halbhydrats bestimmt hierbei die Dauer, bis die Gipskartonplatten geschnitten werden kann und damit die Länge bzw. die Geschwindigkeit des Förderbandes und somit die Produktionsgeschwindigkeit. Darüber hinaus muss die Hydratation abgeschlossen sein, bevor die Platten im Trockner hohen Temperaturen ausgesetzt werden. Ansonsten wird das Festigkeitspotential des Bindemittels unzureichend genutzt und die Gefahr der Volumenexpansion durch Nachhydratation bei Feuchtezutritt geschaffen.

Es besteht daher erhebliches ökonomisches Interesse, den Abbindevorgang zu beschleunigen.

Als Abbindebeschleuniger wird heute in der industriellen Herstellung von Gipskartonplatten aufgemahlenes Calciumsulfat-Dihydrat eingesetzt, wobei ein großer Teil der eingesetzten Partikel im Bereich von 1 $\mu$m liegt. Für den kontinuierlichen Prozess der Gipskartonplattenproduktion ist eine ausgeprägte Stabilität der Beschleunigungswirkung des aufgemahlenes Calciumsulfat-Dihydrat von entscheidender Bedeutung. Die Herstellung eines über einen längeren Zeitraum gleichbleibend effektiven Abbindebeschleunigers bereitet technisch aber weiterhin große Probleme. Die Effektivität von aufgemahlenem Calciumsulfat-Dihydrat, insbesondere in Gegenwart von Luftfeuchtigkeit, nimmt innerhalb von kurzer Zeit ab. Weiterhin kann das aufgemahlene Calciumsulfat-Dihydrat nur in Pulverform eingesetzt werden, da ein Einbringen in Wasser sofort zur Auflösung der feinsten Partikel führt, welche für die Abbindebeschleunigung entscheidend sind. Aus der Dissertation von Müller ("Die Abbindebeschleunigung von Stuckgips durch Calciumsulfatdihydrat", ISBN 978-3-899-58-328-1) ist bekannt, dass sich gefälltes Calciumsulfat Dihydrat nicht als Abbindebeschleuniger eignet und das eine gute Abbindebeschleunigung nur durch Vermahlen von Calciumsulfat-Dihydrat erreicht werden kann, wobei sowohl die Menge an Feinstpartikeln im Nanometerbereich als auch die bei der Mahlung hervorgerufene Kristallgitterstörung für die Wirksamkeit eine große Rolle spielt.

Als weiterer Beschleuniger wird neben aufgemahlenem Calciumsulfat-Dihydrat zusätzlich auch noch Kaliumsulfat eingesetzt. Dies hat jedoch den Nachteil, dass es zu einer deutlichen Verringerung der Enddruckfestigkeit der hergestellten Produkte führt.

Bei der Herstellung von Gipskartonplatten wird das pulverförmige, aufgemahlene Calciumsulfat-Dihydrat in den Durchlaufmischer eingebracht, da nur an dieser Stelle eine homogene Vermischung des Abbindebeschleunigers

mit dem Calciumsulfat-Halbhydrat gewährleistet ist. Dies hat aber den Nachteil, dass der Abbindbeschleuniger schon im Mischer und in den Rohrleitungen, welche den Gipsbrei zu der Kartonbahn führen, zu Verkrustungen führt. Die Verkrustungen müssen in regelmäßigen Zeitabständen mit hohem Arbeitsaufwand und Ausfallzeiten bei der Produktion entfernt werden.

Aus der WO 2005/021632 ist ein Verfahren zur Herstellung feinteiliger, anorganischer Festkörper durch Fällung der feinteiligen anorganischen Festkörper aus Lösungen bekannt. Die Oberfläche der feinteiligen anorganischen Festkörper wird hierbei mit mindestens einem Dispergiermittel gecoated. Als anorganischer Festkörper werden unter vielen anderen Verbindungen gefälltes Calciumsulfat offenbart, während als Dispergiermittel beispielsweise Acrylate- oder Methacrylatcopolymere sowie deren Salze, Polyphosphate und modifizierte Fettsäurederivate eingesetzt werden.

Aufgabe der vorliegenden Erfindung war es deshalb, einen Abbindebeschleuniger für Calciumsulfat-Halbhydrat sowie Anhydrid zur Verfügung zu stellen, welcher neben einer sehr guten Abbindebeschleunigung eine ausgeprägte Lagerstabilität aufweist und somit auch bei der Gipskartonplattenherstellung eine stabile Prozessführung ermöglicht.

Gelöst wurde diese Aufgabe durch ein Verfahren zur Herstellung von Calciumsulfat-Dihydrat, wobei eine wasserlösliche Calciumverbindung, mit einer wasserlöslichen Sulfatverbindung, in Gegenwart von Wasser und einem säuregruppenhaltigen Polymer umgesetzt wird, wobei das säuregruppenhaltige Polymer Polyethergruppen der Struktureinheit (I) umfasst,

$$*\text{-U-(C(O))}_k\text{-X-(AlkO)}_n\text{-W} \qquad \text{(I)}$$

wobei
* die Bindungsstelle an das säuregruppenhaltige Polymer anzeigt,
U für eine chemische Bindung oder eine Alkylengruppe mit 1 bis 8 C-Atomen steht,
X Sauerstoff oder eine Gruppe $NR^1$ bedeutet,
k 0 oder 1 ist,
n für eine ganze Zahl steht, deren Mittelwert, bezogen auf das säuregruppenhaltige Polymer im Bereich von 3 bis 300 liegt,
Alk für $C_2$-$C_4$-Alkylen steht, wobei Alk innerhalb der Gruppe $(Alk\text{-}O)_n$ gleich oder verschieden sein kann,
W einen Wasserstoff-, einen $C_1$-$C_6$-Alkyl- oder einen Arylrest bedeutet oder die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben dem Stickstoffatom und neben Kohlenstoffatomen, 1 , 2 oder 3 zusätzliche Heteroatome, ausgewählt unter Sauerstoff, Stickstoff und Schwefel aufweisen kann, wobei die Stickstoffringlieder eine Gruppe $R^2$ aufweisen können, und wobei 1 oder 2 Kohlenstoffringglieder als Carbonylgruppe vorliegen können,
$R^1$ für Wasserstoff, $C_1$-$C_4$-Alkyl oder Benzyl steht, und
$R^2$ für Wasserstoff, $C_1$-$C_4$-Alkyl oder Benzyl steht.

Überraschend hat sich hierbei herausgestellt, dass das nach dem erfindungsgemäßen Verfahren hergestellte Calciumsulfat-Dihydrat eine hervorragende Wirksamkeit als Abbindebeschleuniger für Calciumsulfat-Halbhydrat und Anhydrit besitzt. Besonders überraschend war hierbei die sehr gute Lagerstabilität der erhaltenen wässrigen Produkte, welche bevorzugt als Suspensionen vorliegen. Auch eine Lagerung des Produktes über mehrere Monate führt zu keiner Veränderung der Abbindebeschleunigung. Weiterhin überraschend war, dass es auch möglich ist die erfindungsgemäß erhaltenen Calciumsulfat-Dihydrat Suspensionen zu trocknen und die erhaltenen Pulver als Abbindebeschleuniger einzusetzen, wobei die Pulver, bezogen auf die Menge an Calciumsulfat-Dihydrat, eine vergleichbare Abbindebeschleunigung wie die erfindungsgemäßen Suspensionen und ebenso eine gute Lagerstabilität aufweisen.

Es ist erfindungswesentlich, dass das erfindungsgemäße Polymer eine Säuregruppe umfasst. Unter dem Begriff "Säuregruppe" wird in der vorliegenden Anmeldung sowohl die freie Säure als auch deren Salze verstanden. Bevorzugt kann es sich bei der Säure um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handeln. Besonders bevorzugt sind Carboxy- und Phosphonooxygruppen.

Als wasserlösliche Calciumverbindungen und wasserlösliche Sulfatverbindung kommen jeweils prinzipiell auch nur verhältnismäßig schwach in Wasser lösliche Verbindungen in Frage, obwohl gut wasserlösliche Verbindungen, welche sich vollständig oder nahezu vollständig in Wasser lösen jeweils bevorzugt sind. Es muss jedoch gewährleistet sein, dass in wässriger Umgebung mit dem entsprechenden Reaktionspartner, also der wasserlöslichen Calciumverbindung und der wasserlöslichen Sulfatverbindungen, eine für die Umsetzung ausreichende Reaktivität vorliegt.

In einer bevorzugten Ausführungsform wird in einem ersten Schritt die wasserlösliche Sulfatverbindung mit Wasser und dem säuregruppenhaltigen Polymer vermischt, so dass ein bevorzugt als Lösung vorliegendes Gemisch erhalten wird, zu welchem in einem sich anschließenden zweiten Schritt die wasserlösliche Calciumverbindung, bevorzugt als Lösung, hinzu gegeben wird. Insbesondere kann die wasserlösliche Calciumverbindung und die wasserlösliche Sulfatverbindung als wässrige Lösungen in folgenden Konzentrationen eingesetzt werden:

i) 0,1 bis 6 mol/l, bevorzugt 0,5 bis 2 mol/l, insbesondere 0,6 bis 1 mol/l der Sulfatverbindung,
ii) 0,1 bis 10 mol/l, bevorzugt 3 bis 8 mol/l, insbesondere 4 bis 6 mol/l der Calciumverbindung.

Die wässrige Mischung kann neben Wasser noch ein oder mehrere weitere Lösungsmittel enthalten. Bevorzugt wird die Umsetzung der wasserlöslichen Calciumverbindung mit der wasserlöslichen Sulfatverbindung, in Gegenwart von Wasser und einem säuregruppenhaltigen Polymer bei einer Temperatur zwischen 5 und 25°C durchgeführt. Höhere Temperaturen führen zu einer schlechteren Wirksamkeit des Abbindebeschleunigers.

Bei der wasserlöslichen Calciumverbindung handelt es sich insbesondere um mindestens eine aus der Reihe Calciumchlorid, Calciumnitrat, Calciumformiat, Calciumacetat, Calciumbicarbonat, Calciumbromid, Calciumcarbonat, Calciumcitrat, Calciumchlorat, Calciumfluorid, Calciumgluconat, Calciumhydroxid, Calciumhypochlorid, Calciumiodat, Calciumiodid, Calciumlactat, Calciumnitrit, Calciumoxalat, Calciumphosphat, Calciumpropionat, Calciumsulfid, Calciumtartrat, Calciumthiocyanat und Calciumaluminat.

Bevorzugt handelt es sich bei der wasserlöslichen Calciumverbindung um mindestens eine aus der Reihe Calciumchlorid, Calciumnitrat, Calciumthiocyanat, Calciumacetat und Calciumformiat.

Bei der wasserlöslichen Sulfatverbindung handelt es sich insbesondere um mindestens eine aus der Reihe Ammoniumsulfat, Magnesiumsulfat, Natriumsulfat, Kaliumsulfat, Lithiumsulfat, Rubidiumsulfat, Cäsiumsulfat, Natriumhydrogensulfat, Kaliumhydrogensulfat, Lithiumhydrogensulfat, Rubidiumhydrogensulfat, Cäsiumhydrogensulfat und Schwefelsäure.

Bevorzugt handelt es sich bei der wasserlöslichen Sulfatverbindung um mindestens eine aus der Reihe Ammoniumsulfat, Magnesiumsulfat, Natriumsulfat, Kaliumsulfat, Lithiumsulfat, Rubidiumsulfat und Cäsiumsulfat.

In einer besonders bevorzugten Ausführungsform stellt das säuregruppenhaltige Polymer ein Polykondensationsprodukt dar, enthaltend

(II) eine einen Aromaten oder Heteroaromaten und eine Polyethergruppe der Formel (I) aufweisende Struktureinheit sowie
(III) eine phosphatierte einen Aromaten oder Heteroaromaten aufweisende Struktureinheit.

Die Struktureinheiten (II) und (III) werden bevorzugt durch folgende allgemeine Formeln repräsentiert

$$\text{A-U-(C(O))}_k\text{-X-(AlkO)}_n\text{-W} \qquad \text{(II)}$$

mit
A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen;

(III)

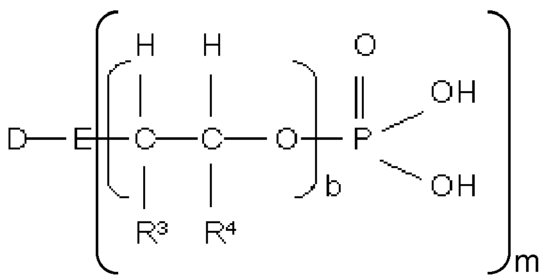

mit
D gleich oder verschieden sowie repräsentiert durch eine substituierte oder unsubstituierte aromatische oder heteroaromatische Verbindung mit 5 bis 10 C-Atomen im aromatischen System.

Weiterhin ist E gleich oder verschieden sowie repräsentiert durch N, NH oder O, m = 2 falls E = N und m = 1 falls E = NH oder O.

$R^3$ und $R^4$ sind unabhängig voneinander gleich oder verschieden sowie repräsentiert durch einen verzweigten oder unverzweigten $C_1$- bis $C_{10}$-Alkylrest, $C_5$- bis $C_8$-Cycloalkylrest, Arylrest, Heteroarylrest oder H, bevorzugt durch H, Methyl, Ethyl oder Phenyl, besonders bevorzugt durch H oder Methyl und insbesondere bevorzugt durch H. Weiterhin ist b gleich oder verschieden sowie repräsentiert durch eine ganze Zahl von 0 bis 300. Falls b = 0 ist E = O.

Bevorzugt enthält das Polykondensationsprodukt eine weitere Struktureinheit (IV), welche durch folgende Formel repräsentiert wird

(IV)

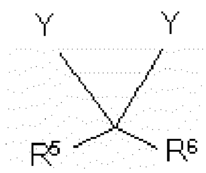

mit

Y unabhängig voneinander gleich oder verschieden und repräsentiert durch (II), (III) oder weitere Bestandteile des Polykondensationsproduktes.

$R^5$ und $R^6$ sind bevorzugt gleich oder verschieden und repräsentiert durch H, $CH_3$, COOH oder eine substituierte oder unsubstituierte aromatische oder heteroaromatische Verbindung mit 5 bis 10 C-Atomen. Hierbei werden $R^5$ und $R^6$ in Struktureinheit (IV) unabhängig voneinander bevorzugt durch H, COOH und/oder Methyl repräsentiert. In einer besonders bevorzugten Ausführungsform werden $R^5$ und $R^6$ durch H repräsentiert.

Das molare Verhältnis der Struktureinheiten (II), (III) und (IV) des erfindungsgemäßen phosphatierten Polykondensationsproduktes kann in weiten Bereichen variiert werden. Als zweckmäßig hat es sich erwiesen, dass das Molverhältnis der Struktureinheiten [(II) + (III)] : (IV) 1 : 0,8 bis 3, bevorzugt 1 : 0,9 bis 2 und besonders bevorzugt 1: 0,95 bis 1,2 beträgt.

Das Molverhältnis der Struktureinheiten (II) : (III) liegt normalerweise bei 1 : 10 bis 10 : 1, bevorzugt bei 1 : 7 bis 5 : 1 und besonders bevorzugt bei 1 : 5 bis 3 : 1.

Die Gruppen A und D in den Struktureinheiten (II) und (III) des Polykondensationsproduktes werden meist durch Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl bevorzugt Phenyl repräsentiert, wobei A und D unabhängig voneinander gewählt werden können und auch jeweils aus einem Gemisch der genannten Verbindungen bestehen können. Die Gruppen X und E werden unabhängig voneinander bevorzugt durch O repräsentiert.

Bevorzugt wird n in Struktureinheit (I) durch eine ganze Zahl von 5 bis 280, insbesondere 10 bis 160 und besonders bevorzugt 12 bis 120 repräsentiert und b in Struktureinheit (III) durch eine ganze Zahl von 0 bis 10, bevorzugt 1 bis 7 und besonders bevorzugt 1 bis 5. Die jeweiligen Reste, deren Länge durch n bzw. b definiert wird, können hierbei aus einheitlichen Baugruppen bestehen, es kann aber auch zweckmäßig sein, dass es sich um eine Mischung aus unterschiedlichen Baugruppen handelt. Weiterhin können die Reste der Struktureinheiten (II) und (III) unabhängig voneinander jeweils die gleiche Kettenlänge besitzen, wobei n bzw. b jeweils durch eine Zahl repräsentiert wird. Es wird aber in der Regel zweckmäßig sein, dass es sich jeweils um Mischungen mit unterschiedlichen Kettenlängen handelt, so dass die Reste der Struktureinheiten im Polykondensationsprodukt für n und unabhängig für b unterschiedliche Zahlenwerte aufweisen.

In einer besonderen Ausführungsform sieht die vorliegende Erfindung weiterhin vor, dass es sich um ein Natrium-, Kalium-, Ammonium- und/oder Calcium-Salz und bevorzugt um ein Natrium- und Calcium-Salz, des phosphatierten Polykondensationsproduktes handelt.

Häufig weist das erfindungsgemäße phosphatierte Polykondensationsprodukt ein gewichtsmittleres Molekulargewicht von 4000 g/mol bis 150.000 g/mol, vorzugsweise 10.000 bis 100.000 g/mol und besonders bevorzugt 20.000 bis 75.000 g/mol auf.

Bezüglich der gemäß vorliegender Erfindung bevorzugt zu verwendenden phosphatierten Polykondensationsprodukte und deren Herstellung wird weiterhin auf die Patentanmeldungen WO 2006/042709 und WO 2010/040612 Bezug genommen, deren Inhalt hiermit in die Anmeldung aufgenommen wird.

In einer weiteren bevorzugten Ausführungsform handelt es sich bei dem säuregruppenhaltigen Polymer um mindestens ein Copolymer, welches erhältlich ist durch Polymerisation einer Mischung von Monomeren, umfassend
(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und
(VI) mindestens ein ethylenisch ungesättigtes Monomer mit einer Polyethergruppe der Struktureinheit (I).

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (V) durch mindestens eine der folgenden allgemeinen Formeln aus der Gruppe (Va), (Vb) und (Vc) repräsentiert:

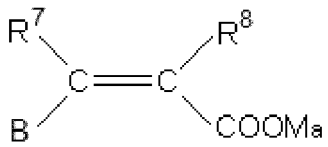
(Va)

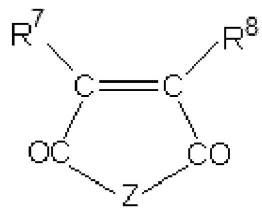
(Vb)

Bei dem Mono- oder Dicarbonsäure-Derivat (Va) und dem in cyclischer Form vorliegenden Monomer (Vb), wobei Z = O (Säureanhydrid) oder $NR^7$ (Säureimid) darstellen, steht $R^7$ und $R^8$ unabhängig voneinander für Wasserstoff oder einen aliphatischen Kohlenwasserstoffrest mit 1 bis 20 C-Atomen, vorzugsweise eine Methylgruppe. B bedeutet H, $-COOM_a$, $-CO-O(C_qH_{2q}O)_r-R^9$, $-CO-NH-(C_qH_{2q}O)_r-R^9$.

M bedeutet Wasserstoff, ein ein- oder zweiwertiges Metallkation, vorzugsweise Natrium-, Kalium-, Calcium- oder Magnesium-Ion, weiterhin Ammonium oder ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären $C_{1-20}$-Alkylaminen, $C_{1-20}$-Alkanolaminen, $C_{5-8}$-Cycloalkylaminen und $C_{6-14}$-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

$R^9$ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2 , 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Die folgende Formel stellt das Monomer (Vc) dar:

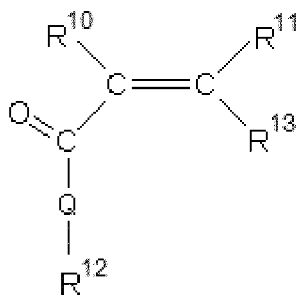
(Vc)

Hierbei steht $R^{10}$ und $R^{11}$ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen. Q kann gleich oder verschieden sein und wird durch NH, $NR^9$ oder O repräsentiert, wobei $R^9$ die oben genannte Bedeutung besitzt.

Weiterhin ist $R^{12}$ gleich oder verschieden und wird durch $(C_nH_{2n})-SO_3H$ mit n = 0, 1, 2, 3 oder 4, $(C_nH_{2n})-OH$ mit n = 0, 1, 2, 3 oder 4; $(C_nH_{2n})-PO_3H_2$ mit n = 0, 1, 2, 3 oder 4, $(C_nH_{2n})-OPO_3H_2$ mit n = 0, 1, 2, 3 oder 4, $(C_6H_4)-SO_3H$, $(C_6H_4)-PO_3H_2$, $(C_6H_4)-OPO_3H_2$ und $(C_nH_{2n})-NR^{14}_2$ mit n = 0, 1, 2, 3 oder 4 repräsentiert.

$R^{13}$ bedeutet H, $-COOM_a$, $-CO-O(C_qH_{2q}O)_r-R^9$, $-CO-NH-(C_qH_{2q}O)_r-R^9$, wobei $M_a$, $R^9$, q und r die oben genannte Bedeutungen besitzen.

$R^{14}$ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

In einer besonders bevorzugten Ausführungsform wird das ethylenisch ungesättigte Monomer (VI) durch folgende allgemeine Formeln repräsentiert

(VI)

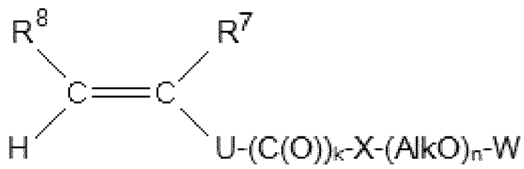

worin alle Reste die oben genannten Bedeutungen aufweisen.

Hinsichtlich des erfindungsgemäßen Verfahrens, wird bezogen auf das Calciumsulfat-Dihydrat bevorzugt zwischen 0,005 und 100 Gew.-%, insbesondere zwischen 0,01 und 50 Gew.-%, insbesondere bevorzugt zwischen 0,02 und 30 Gew.-%, besonders bevorzugt zwischen 0,03 und 15 Gew.-% und am meisten bevorzugt zwischen 0,05 und 10 Gew.-% des säuregruppenhaltigen Polymers eingesetzt.

Ein weiterer Gegenstand der vorliegenden Erfindung ist Calciumsulfat-Dihydrat herstellbar nach dem erfindungsgemäßen Verfahren.

Weiterhin sieht die vorliegende Erfindung die Verwendung von Calciumsulfat-Dihydrat, hergestellt durch Umsetzung einer wasserlöslichen Calciumverbindung, mit einer wasserlöslichen Sulfatverbindung, in Gegenwart von Wasser und einem säuregruppenhaltigen Polymer, zur Herstellung einer Gipskartonplatte vor. Insbesondere bevorzugt kann es sich bei den säuregruppenhaltigen Polymeren um die bei dem erfindungsgemäßen Verfahren eingesetzten Polymere mit Polyethergruppen der Struktureinheit (I) handeln. Es ist aber weiterhin möglich auch mindestens ein säuregruppenhaltiges Polymer aus der Reihe Polyacrylsäure, Polymethacrylsäure, Polyvinylphosphonsäure und Copolymere enthaltend Acrylsäure, Methacrylsäure, Vinylsulfonsäure, 2-Acrylamido-2-methylpropansulfonsäure und Vinylphosphonsäure einzusetzen. Insbesondere bevorzugt sind Polyacrylsäure, Polymethacrylsäure und Polyvinylphosphonsäure. Insbesondere werden, bezogen auf das bei der Herstellung der Gipskartonplatte eingesetzte Calciumsulfat-Halbhydrat, 0,0001 bis 1 Gew.-%, bevorzugt 0,001 bis 0,5 Gew.-% und insbesondere bevorzugt 0,005 bis 0,2 Gew.-% des Calciumsulfat-Dihydrats verwendet.

In einer besonders bevorzugten Ausführungsform wird das durch Umsetzung einer wasserlöslichen Calciumverbindung, mit einer wasserlöslichen Sulfatverbindung, in Gegenwart von Wasser und einem säuregruppenhaltigen Polymer erhaltene Calciumsulfat-Dihydrat in Form einer wässrigen Suspension, wie sie insbesondere direkt aus dem erfindungsgemäßen Verfahren erhalten werden kann, zur Herstellung einer Gipskartonplatte eingesetzt. Bevorzugt enthält die erfindungsgemäße Calciumsulfat-Dihydrat-Suspension zwischen 0,1 und 3,0 mol/l, insbesondere zwischen 0,3 und 1,5 mol/l und besonders bevorzugt zwischen 0,6 und 1,0 mol/l Calciumsulfat-Dihydrat. Es ist hierbei von besonderem Vorteil, dass der zur Herstellung der Gipskartonplatte eingesetzte Gipsbrei erst nach dem Aufbringen auf die Kartonbahn mit dem erfindungsgemäßen Calciumsulfat-Dihydrat in Kontakt gebracht werden kann, wobei das Calciumsulfat-Dihydrat als wässrige Suspension eingesetzt wird. Durch die Verwendung einer Calciumsulfat-Dihydrat-Suspension wird eine leichte Applizierbarkeit und eine sehr gute homogene Verteilung in dem Gipsbrei erreicht. Besonders vorteilhaft ist hierbei, dass eine Verkrustung des Durchlaufmischers und der Rohrleitungen, welche den Gipsbrei zu der Kartonbahn führen, weitgehend vermieden werden kann. Die Reinigungsintervalle einer kontinuierlich betrieben Anlage wird hierdurch drastisch verlängert.

Die nachfolgenden Beispiele verdeutlichen die Vorteile der vorliegenden Erfindung

Beispiele

Polymersynthese

Synthese des phosphorsäureesterhaltigen Kammpolymers:

In einem Glasreaktor, ausgestattet mit Rührer, Thermometer, pH-Elektrode und mehreren Zulaufeinrichtungen, werden 180 g deionisiertes Wasser vorgelegt und auf eine Polymerisationsstarttemperatur von 80 °C temperiert (Vorlage). In einem separaten Zulaufgefäß werden 4.669 g einer 25,7%-igen aufgereinigten wässrigen Methylpolyethylenglykol(5.000)methacrylsäureester (MPEG5000-Methacrylat) Lösung mit 297,6 g Hydroxyethylmethacrylatphosphorsäureester (HEMA - Phosphat) und 190,2 g einer 20%igen NaOH Lösung (entspricht Lösung A) vermischt. In einem weiteren separaten Zulaufgefäß werden 13,71 g Natriumperoxodisulfat mit 182,1 g Wasser vermischt (Lösung B). In einem dritten Zulauf wird mit 13,2 g 2-Mercaptoethanol und 39,6 g deionisiertem Wasser eine 25%ige Lösung hergestellt (Lösung C).

Nach Herstellung von Lösung A, B und C wird zeitgleich mit der Zugabe aller drei Lösungen zur gerührten Vorlage begonnen.

Nach Beendigung der Zugabe wird die Temperatur für weitere 30 Minuten bei 80°C gelassen, danach lässt man die Lösung abkühlen und es wird mit 50%iger Natronlauge auf pH 7,3 neutralisiert. Das erhaltene Copolymer fällt

als klare Lösung an, die einen Feststoffgehalt von 27,8 % aufweist. Das mittlere Molekulargewicht des Copolymers liegt bei Mw 39.000 g/Mol, Mp 34.000 g/Mol und die Polydispersität beträgt 1.55.

Synthese des phosphatierten Polykondensationsproduktes:

Ein beheizbarer und mit Rührer ausgestatteter Reaktor wird mit 17,8 Teilen Polyphosphorsäure befüllt und auf 90 °C aufgeheizt. Innerhalb von 15 min werden 30,7 Teile Phenoxyethanol unter Rühren zudosiert. Nach 60 min werden 445 Teile Poly-(ethylenoxid)monophenylether (mittleres Molekulargewicht 5000 g/mol), 34,8 Teile konzentrierte Methansulfonsäure, 14,16 Teile Paraformaldehyd und 23,2 Teile Wasser zugegeben. Das Reaktionsgemisch wird unter Rühren weitere 6 Stunden auf 105 °C erhitzt. Danach lässt man abkühlen und neutralisiert mit 50%iger Natronlauge auf pH 7. Das Kondensationsprodukt weist ein mittleres Molekulargewicht $M_w$ von ca. 22.000 g/mol auf (bestimmt per GPC).

Beschreibung der weiteren eingesetzten Polymere:

Das Kammpolymer Melflux 2650 L ist ein kommerziell erhältlicher Polycarboxylatether der BASF Construction Polymers GmbH. Das Polymer basiert auf den Monomeren Maleinsäure, Acrylsäure, Vinyloxybutyl-polyethylenglycol - 5800. $M_w$=36.000g/mol, bestimmt per GPC; der Feststoffgehalt der Lösung liegt bei 33%.

Herstellung des Calciumsulfat-Dihydrats

Erfindungsgemäße Beispiele:

Verwendete Chemikalien: Calciumchlorid (wasserfrei): Sigma-Aldrich >97%; Magnesiumsulfat Heptahydrat: Merck > 99%.

Beispiel 1

Zu einer Lösung von 52,9 g Ammoniumsulfat (0,4 mol) und 0,93 g des oben beschriebenen phosphatierten Polykondensationsproduktes (bezogen auf Aktivgehalt Polymer) in 282 g Wasser wird eine Lösung von 44,4 g Calciumchlorid (wasserfrei, 0,4 mol) in 75 g Wasser gegeben. Die resultierende Suspension wird für 1 Stunde mit einem Axialrührer bei 800 Umdrehungen pro Minute gerührt.

Beispiel 2

Zu einer Lösung von 98,6 g Magnesiumsulfat Heptahydrat (0,4 mol) und 0,46 g (bezogen auf Aktivgehalt Polymer) des oben beschriebenen phosphorsäureesterhaltigen Kammpolymers in 282 g Wasser wird eine Lösung von 44,4 g Calciumchlorid (wasserfrei, 0,4 mol) in 75 g Wasser gegeben. Die resultierende Suspension wird für 1 Stunde mit einem Axialrührer bei 800 Umdrehungen pro Minute gerührt.

Beispiel 3

Zu einer Lösung von 57,6 g Ammoniumsulfat (0,42 mol) und 0,93 g des oben beschriebenen phosphatierten Polykondensationsproduktes (bezogen auf Aktivgehalt Polymer) in 282 g Wasser wird eine Lösung von 44,4 g Calciumchlorid (wasserfrei, 0,4 mol) in 75 g Wasser gegeben. Die resultierende Suspension wird für 1 Stunde mit einem Axialrührer bei 800 Umdrehungen pro Minute gerührt.

Beispiel 4

Zu einer Lösung von 52,9 g Ammoniumsulfat (0,4 mol) und 4,63 g MVA 2650 L (bezogen auf Aktivgehalt Polymer) in 282 g Wasser wird eine Lösung von 44,4 g Calciumchlorid (wasserfrei, 0,4 mol) in 75 g Wasser gegeben. Die resultierende Suspension wird für 1 Stunde mit einem Axialrührer bei 800 Umdrehungen pro Minute gerührt.

Beispiel 5

Zu einer Lösung von 98,6 g Magnesiumsulfat Heptahydrat (0,4 mol) und 0,93 g einer Polyacrylsäure ($M_w$ = 2500 g/mol) in 282 g Wasser wird eine Lösung von 44,4 g Calciumchlorid (wasserfrei, 0,4 mol) in 75 g Wasser gegeben. Die resultierende Suspension wird für 1 Stunde mit einem Axialrührer bei 800 Umdrehungen pro Minute gerührt.

Vergleichsbeispiele

Beispiel 6

Zu einer Lösung von 98,6 g Magnesiumsulfat Heptahydrat (0,4 mol) in 282 g Wasser wird eine Lösung von 44,4 g Calciumchlorid (wasserfrei, 0,4 mol) in 75 g Wasser gegeben. Die resultierende Suspension wird für 1 Stunde mit einem Axialrührer bei 800 Umdrehungen pro Minute gerührt.

Als Vergleichsbeispiele wurden weiterhin zwei Proben von gemahlenem Calciumsulfat-Dihydrat verwendet, welche kommerziell in der Herstellung von Gipskartonplatten zum Einsatz kommen. Diese werden im Folgenden mit Probe 1 und Probe 2 bezeichnet.

Physikalische Eigenschaften der eingesetzten Proben

Während die eingesetzten Beschleuniger auf Basis des gemahlenem Calciumsulfat-Dihydrats (Probe 1 und Probe 2) relativ große Partikel aufweisen, sind die Korngrößen der erfindungsgemäß hergestellten Suspensionen deutlich kleiner (vgl. Tabelle 1). Außerdem kann man erkennen, dass die Art des Polymers (vgl. Beispiele 1 bis 4 und Beispiel 5) und die Gegenwart von Polymer (Beispiel 6 im Vergleich zu den Beispielen 1 bis 5) für die Partikelgrößen und die anwendungstechnischen Eigenschaften eine sehr große Rolle spielen (vgl. Tabelle 1 und Tabelle 3).

Tabelle 1. Partikelgrößenverteilungen Proben 1 und 2 (gemahlenes Calciumsulfat Dihydrat) und der in den Beispielen 1 bis 6 beschriebenen Proben.

| | d(0.1) / μm | d(0.5) / μm | d(0.9) / μm |
|---|---|---|---|
| Referenz: Probe 1 | 0.833 | 12.542 | 125.452 |
| Referenz: Probe 2 | 0.674 | 4.176 | 32.200 |
| Beispiel 1 | 0.134 | 0.180 | 0.248 |
| Beispiel 2 | 0.140 | 0.194 | 0.701 |
| Beispiel 3 | 0.136 | 0.182 | 0.253 |
| Beispiel 4 | 0.136 | 0.181 | 0.251 |
| Beispiel 5 | 2.452 | 10.148 | 21.901 |
| Beispiel 6 | 1.579 | 6.473 | 18.505 |

Die erfindungsgemäßen Calciumsulfat-Dihydrat-Suspensionen zeigen über einen langen Zeitraum eine sehr stabile Partikelgrößenverteilung. In Abbildung 5 sind die Kenndaten zur Partikelgrößenverteilung (gemessen mittels statischer Lichtstreuung mit einem Malvern Mastersizer 2000) einer erfindungsgemäß hergestellten Calciumsulfat-Dihydrat-Suspension gezeigt. Man erkennt, dass sich die Partikelgrößen über einen Zeitraum von mindestens 160 Tagen praktisch nicht verändern. Dieses Verhalten spiegelt sich auch in Anwendungstest wieder: Die Performance bleibt über den betrachteten Zeitraum konstant.

Anwendungstests

Die Performance der Proben 1 und 2 von gemahlenem Calciumsulfat-Dihydrat und der erfindungsgemäß hergestellten Beschleuniger auf Basis von Calciumsulfat-Dihydrat-Suspensionen wurde auf verschiedene Weise getestet:

Per Wärmeflusskalorimetrie

Da reines Calciumsulfat-Halbhydrat eine zu hohe Reaktivität zeigt, um per Wärmeflusskalorimetrie untersucht zu werden, wird die Reaktion zunächst verzögert.

Für die Messung werden 40 g Calciumsulfat-Halbhydrat (Sigma-Aldrich, >97%) mit einer Mischung aus 15 g Wasser und 25 g einer 0,056 %igen Lösung eines Calciumsalzes einer N-Polyoxymethylen-Aminosäure (Retardan P der Sika AG) versetzt. Die resultierende Masse wird für 60 Sekunden mit einem Axialrührer bei 750 Umdrehungen pro Minute gerührt. In einer anschließenden Pause von 30 Sekunden wird der Beschleuniger zugegeben und anschließend noch einmal für 30 Sekunden mit einem Axialrührer bei 750 Umdrehungen pro Minute gerührt. Der Wärmefluss wird mit einem TAM Air-Kalorimeter (TA Instruments) aufgezeichnet.

Die Performance der Beschleuniger wird auf zweierlei Weise beurteilt (die Wärmeflusskurven sind in Abbildung 1 gezeigt.):

(i) Verschiebung des Zeitpunkts, t, des maximalen Wärmeflusses. Im Beispiel wird das Wärmeflussmaximum von 164 min ohne Beschleuniger (= $t_{Blind}$) auf 22 min (Beispiel 1 = $t_{Probe}$) verschoben, daraus berechnet sich der Beschleunigungsfaktor $a_t$ folgendermaßen:

$$a_t = \frac{t_{Blind} - t_{Probe}}{t_{Blind}}$$

Für das gezeigte Beispiel also:

$$a_t = \frac{164min - 22min}{164min} = 0,87 = 87\%$$

(ii) Änderung der Steigung (Steilheit), s, des maximalen Wärmefluss-Peaks. Bei dem gezeigten Beispiel beträgt die Steigung des Bildwerts 2,42, des mit dem Beschleuniger aus Beispiel 1 versetzten Systems 0,0374. Der Beschleunigungsfaktor $a_s$ berechnet sich aus:

$$a_s = \frac{s_{Probe}}{s_{Blind}} - 1$$

Für das gezeigte Beispiel:

$$a_s = \frac{0,794}{0,152} - 1 = 4,22 = 422\%$$

<u>In Anwendungstests</u>

300 g β-Halbhydrat (REA) werden zunächst mit 0,05 g Retardan P vorhomogenisiert, in 198 g Wasser eingestreut und anschließend für 15 Sekunden stehengelassen. Danach startet das Rühren mit dem Hobart-Mischer für weitere 15 Sekunden bei Stufe II (285 Umdrehungen pro Minute). Während dieser Zeit wird der Beschleuniger rasch beigemengt. Nach dem Befüllen eines Zylinders (h = 10 cm, d = 5 cm), der nach 60 Sekunden angehoben wird, erfolgt die Bestimmung des Fließmaßes. Die Erstarrungszeit wird mit der sogenannten Messerschnitt-Methode (nach DIN EN 13279-2) bestimmt. Eine Gegenüberstellung der Ergebnisse eines Standard-Beschleunigers (Probe 1) und eines erfindungsgemäß hergestellten Beschleunigers (Beispiel 1) sind in Tabelle 2 zusammengefasst.

Wird der Beschleuniger erst am Ende des Mischens zugegeben, beobachtet man für erfindungsgemäß hergestellte Beschleuniger die gleichen Versteifungszeiten wie im Fall der frühen Zugabe. Die Standard-Beschleuniger zeigen bei später Zugabe eine deutlich schlechtere Beschleunigung (vgl. Tabelle 2).

Tabelle 2. Vergleich anwendungstechnischer Daten eines Standard-Beschleunigers (Probe 1) und eines erfindungsgemäß hergestellten Beschleunigers (Beispiel 1)

| w/g | Beschleuniger | Beschleuniger-Dosierung (g) | Retardan P (g) | Fließmaß ASTM (cm) | Versteifungszeit (min:s) |
|---|---|---|---|---|---|
| 0,66 | Standard-Beschleuniger, früh dosiert | 0,2 | 0,05 | 19,7 | 4:10 |
| 0,66 | Standard-Beschleuniger, spät dosiert | 0,2 | 0,05 | 19,8 | 5:15 |
| 0,66 | Beispiel 1 | 0,2 | 0,05 | 18,4 | 1:50 |

Ergebnisse

Die Performance-Daten der Calciumsulfat-Dihydrat-Suspensionen aus Beispiel 1 bis 6 und der Proben 1 und 2 sind in Tabelle 3 zusammengefasst und für die Beispiele 1 bis 6 in Abbildung 2a und 2b graphisch dargestellt. Zum Vergleich sind in Abbildung 3 die Wärmeflusskurven der Standard-Beschleuniger (Probe 1 und 2) gezeigt. Dabei wurden für die kalorimetrischen Untersuchungen jeweils 0,5 % Aktivsubstanz bezogen auf Calciumsulfat-Halbhydrat verwendet, für die Anwendungstests zur Bestimmung der Versteifungszeit jeweils 0,067 %.

Tabelle 3. Zusammenfassung der Leistungsdaten zweier Standard-Beschleuniger (Probe 1 und Probe 2) auf Basis gemahlenen Calciumsulfat-Dihydrat und der Suspensionen aus den Beispielen 1 bis 6. Für die Versteifungszeit ist jeweils die Zeit und die Beschleunigung gegenüber dem Mittelwert der Zeiten der beiden Standard-Beschleuniger angegeben).

| | $a_t$ (%) | $a_s$ (%) | Versteifungszeit (min:s; %) |
|---|---|---|---|
| Referenz: Probe 1 | 51 | 56 | 4:20; 0% |
| Referenz: Probe 2 | 39 | 24 | 3:50; 0% |
| Beispiel 1 | 87 | 422 | 1:50; 55% |
| Beispiel 2 | 75 | 109 | 2:15; 45% |
| Beispiel 3 | 84 | 350 | 1:50; 55% |
| Beispiel 4 | 79 | 84 | 2:55; 30% |
| Beispiel 5 | 76 | 107 | 2:15; 45% |
| Beispiel 6 | 4 | 3 | 8:15; -100% |

Aus der Tabelle ergibt sich, dass bei gleicher Dosierung mit den erfindungsgemäß hergestellten Gips-Suspensionen ein deutlich besseres Ergebnis erzielt werden kann. Betrachtet man die notwendige Dosierung, um eine bestimmte Versteifungszeit zu erhalten, ist bei Verwendung der erfindungsgemäßen Suspensionen nur ca. 15 % der Dosierung an Calciumsulfat-Dihydrat notwendig im Vergleich zu den Standard-Beschleunigern, z.B. Probe 1 oder Probe 2.

Die Dosierkurve eines Standard-Beschleunigers auf Basis gemahlenen Calciumsulfat-Dihydrat (Probe 1) ist in Abbildung 4 gezeigt. Man erkennt, dass eine bestimmte Beschleunigung nicht überschritten werden kann, da ab einer bestimmten Menge Beschleuniger ein weiteres Dosieren kaum bzw. keinen Effekt mehr zeigt.

Zum Vergleich ist eine Dosierkurve einer erfindungsgemäß hergestellten Suspension (Beispiel 1) gezeigt. Man erkennt eine deutlich höhere Dosiereffizienz und eine wesentlich höhere maximale Performance.

## Patentansprüche

1. Verfahren zur Herstellung von Calciumsulfat-Dihydrat, wobei eine wasserlösliche Calciumverbindung, mit einer wasserlöslichen Sulfatverbindung, in Gegenwart von Wasser und einem säuregruppenhaltigen Polymer umgesetzt wird, **dadurch gekennzeichnet, dass** das säuregruppenhaltige Polymer Polyethergruppen der Struktureinheit (I) umfasst,

$$*\text{-U-(C(O))}_k\text{-X-(AlkO)}_n\text{-W} \qquad \text{(I)}$$

wobei
* die Bindungsstelle an das säuregruppenhaltige Polymer anzeigt,
U für eine chemische Bindung oder eine Alkylengruppe mit 1 bis 8 C-Atomen steht,
X Sauerstoff oder eine Gruppe $NR^1$ bedeutet,
k 0 oder 1 ist,
n für eine ganze Zahl steht, deren Mittelwert, bezogen auf das säuregruppenhaltige Polymer im Bereich von 3 bis 300 liegt,
Alk für $C_2$-$C_4$-Alkylen steht, wobei Alk innerhalb der Gruppe $(Alk\text{-}O)_n$ gleich oder verschieden sein kann,
W einen Wasserstoff-, einen $C_1$-$C_6$-Alkyl- oder einen Arylrest bedeutet oder die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben

dem Stickstoffatom und neben Kohlenstoffatomen, 1 , 2 oder 3 zusätzliche Heteroatome, ausgewählt unter Sauerstoff, Stickstoff und Schwefel aufweisen kann, wobei die Stickstoffringlieder eine Gruppe $R^2$ aufweisen können, und wobei 1 oder 2 Kohlenstoffringglieder als Carbonylgruppe vorliegen können,
$R^1$ für Wasserstoff, $C_1$-$C_4$-Alkyl oder Benzyl steht, und
$R^2$ für Wasserstoff, $C_1$-$C_4$-Alkyl oder Benzyl steht.

**2.** Verfahren nach Anspruch 1, **dadurch gekennzeichnet, dass** es sich bei der Säuregruppe des Polymers um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handelt.

**3.** Verfahren nach Anspruch 1, **dadurch gekennzeichnet, dass** das säuregruppenhaltige Polymer ein Polykondensationsprodukt darstellt, enthaltend

(II) eine einen Aromaten oder Heteroaromaten und eine Polyethergruppe der Formel (I) aufweisende Struktureinheit,
(III) eine phosphatierte einen Aromaten oder Heteroaromaten aufweisende Struktureinheit.

**4.** Verfahren nach Anspruch 3, **dadurch gekennzeichnet, dass** die Struktureinheiten (II) und (III) durch folgende allgemeine Formeln repräsentiert werden

$$A\text{-}U\text{-}(C(O))_k\text{-}X\text{-}(AlkO)_n\text{-}W \qquad (II)$$

mit
A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen;

(III)

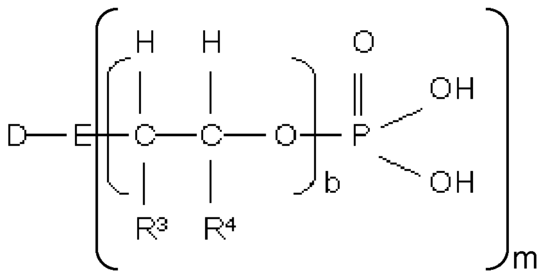

mit
D gleich oder verschieden sowie repräsentiert durch eine substituierte oder unsubstituierte aromatische oder heteroaromatische Verbindung mit 5 bis 10 C-Atomen im aromatischen System
mit
E gleich oder verschieden sowie repräsentiert durch N, NH oder O
mit
m = 2 falls E = N und m = 1 falls E = NH oder O
mit
$R^3$ und $R^4$ unabhängig voneinander gleich oder verschieden sowie repräsentiert durch einen verzweigten oder unverzweigten $C_1$- bis $C_{10}$-Alkylrest, $C_5$- bis $C_8$-Cycloalkylrest, Arylrest, Heteroarylrest oder H
mit b
gleich oder verschieden sowie repräsentiert durch eine ganze Zahl von 0 bis 300.

**5.** Verfahren nach Anspruch 3 oder 4, **dadurch gekennzeichnet, dass** das Polykondensationsprodukt eine weitere Struktureinheit (IV) enthält, welche durch folgende Formel repräsentiert wird

(IV)

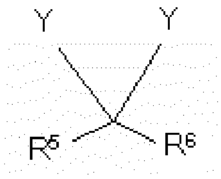

..

mit
Y unabhängig voneinander gleich oder verschieden und repräsentiert durch (II), (III) oder weitere Bestandteile des Polykondensationsproduktes.

**6.** Verfahren nach Anspruch 1, **dadurch gekennzeichnet, dass** das säuregruppenhaltige Polymer mindestens ein Copolymer darstellt, welches erhältlich ist durch Polymerisation einer Mischung von Monomeren, umfassend
(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und
(VI) mindestens ein ethylenisch ungesättigtes Monomer mit einer Polyethergruppe der Struktureinheit (I).

**7.** Verfahren nach Anspruch 6, **dadurch gekennzeichnet, dass** das ethylenisch ungesättigte Monomer (V) durch mindestens eine der folgenden allgemeinen Formeln aus der Gruppe (Va), (Vb) und (Vc) repräsentiert wird

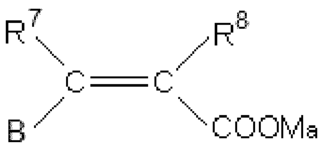

(Va)

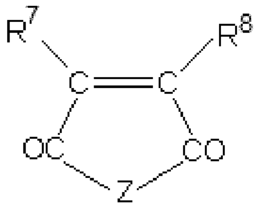

(Vb)

wobei
$R^7$ und $R^8$ unabhängig voneinander für Wasserstoff oder einen aliphatischen Kohlenwasserstoffrest mit 1 bis 20 C-Atomen
B für H, $-COOM_a$, $-CO-O(C_qH_{2q}O)_r-R^9$, $-CO-NH-(C_qH_{2q}O)_r-R^9$
M für Wasserstoff, ein ein- oder zweiwertiges Metallkation, Ammoniumion oder einen organischen Aminrest
a für %2 oder 1
$R^9$ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede $(C_qH_{2q}O)$-Einheit gleich oder verschieden 2, 3 oder 4 und
r für 0 bis 200
Z für O, $NR^3$
stehen,

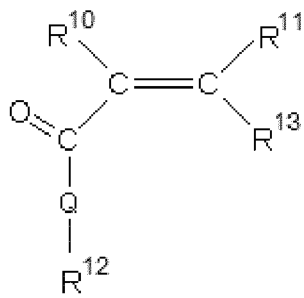

(Vc)

mit
$R^{10}$ und $R^{11}$ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest

mit 6 bis 14 C-Atomen
$R^{12}$ gleich oder verschieden sowie repräsentiert durch $(C_nH_{2n})$-$SO_3H$ mit n = 0, 1, 2, 3 oder 4, $(C_nH_{2n})$-OH mit n = 0, 1, 2, 3 oder 4; $(C_nH_{2n})$-$PO_3H_2$ mit n = 0, 1, 2, 3 oder 4, $(C_nH_{2n})$-$OPO_3H_2$ mit n= 0, 1, 2, 3 oder 4, $(C_6H_4)$-$SO_3H$, $(C_6H_4)$-$PO_3H_2$, $(C_6H_4)$-$OPO_3H_2$ und $(C_nH_{2n})$-$NR^{14}_b$ mit n = 0, 1, 2, 3 oder 4 und b = 2 oder 3
$R^{13}$ für H, -$COOM_a$, -CO-O$(C_qH_{2q}O)_r$-$R^9$, -CO-NH-$(C_qH_{2q}O)_r$-$R^9$, wobei $M_a$, $R^9$, q und r oben genannte Bedeutungen besitzen
$R^{14}$ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.
Q gleich oder verschieden sowie repräsentiert durch NH, $NR^{15}$ oder O; wobei $R^{15}$ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

8. Verfahren nach Anspruch 6 oder 7, **dadurch gekennzeichnet, dass** das ethylenisch ungesättigte Monomer (VI) durch folgende allgemeine Formeln repräsentiert wird

(VI)

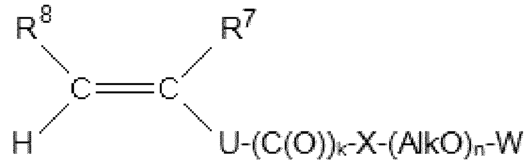

worin
alle Reste die oben genannten Bedeutungen aufweisen.

9. Verfahren nach einem der Ansprüche 1 bis 8, **dadurch gekennzeichnet, dass** bezogen auf Calciumsulfat-Dihydrat zwischen 0,005 und 100 Gew.-% des säuregruppenhaltigen Polymers eingesetzt wird.

10. Verfahren nach einem der Ansprüche 1 bis 9, **dadurch gekennzeichnet,**
**dass** in einem ersten Schritt die wasserlösliche Sulfatverbindung mit Wasser und dem säuregruppenhaltigen Polymer vermischt wird, zu welchem in einem sich anschließenden zweiten Schritt die wasserlösliche Calciumverbindung hinzu gegeben wird.

11. Verfahren nach einem der Ansprüche 1 bis 10, **dadurch gekennzeichnet, dass** die wasserlösliche Calciumverbindung und die wasserlösliche Sulfatverbindung als wässrige Lösungen in folgenden Konzentrationen eingesetzt werden:

i) 0,1 bis 6 mol/l der Sulfatverbindung,
ii) 0,1 bis 10 mol/l der Calciumverbindung.

12. Calciumsulfat-Dihydrat herstellbar nach einem Verfahren nach einem der Ansprüche 1 bis 11.

13. Verwendung von Calciumsulfat-Dihydrat, hergestellt durch Umsetzung einer wasserlöslichen Calciumverbindung, mit einer wasserlöslichen Sulfatverbindung, in Gegenwart von Wasser und einem säuregruppenhaltigen Polymer, zur Herstellung einer Gipskartonplatte.

14. Verwendung nach Anspruch 13, **dadurch gekennzeichnet, dass** 0,0001 bis 1 Gew.-% des Calciumsulfat-Dihydrats, bezogen auf das bei der Herstellung der Gipskartonplatte eingesetzte Calciumsulfat-Halbhydrat, verwendet wird.

15. Verwendung nach Anspruch 13 oder 14, **dadurch gekennzeichnet, dass** der zur Herstellung der Gipskartonplatte eingesetzte Gipsbrei erst nach dem Aufbringen auf die Kartonbahn mit dem Calciumsulfat-Dihydrat in Kontakt gebracht wird, wobei das Calciumsulfat-Dihydrat als wässrige Suspension eingesetzt wird.

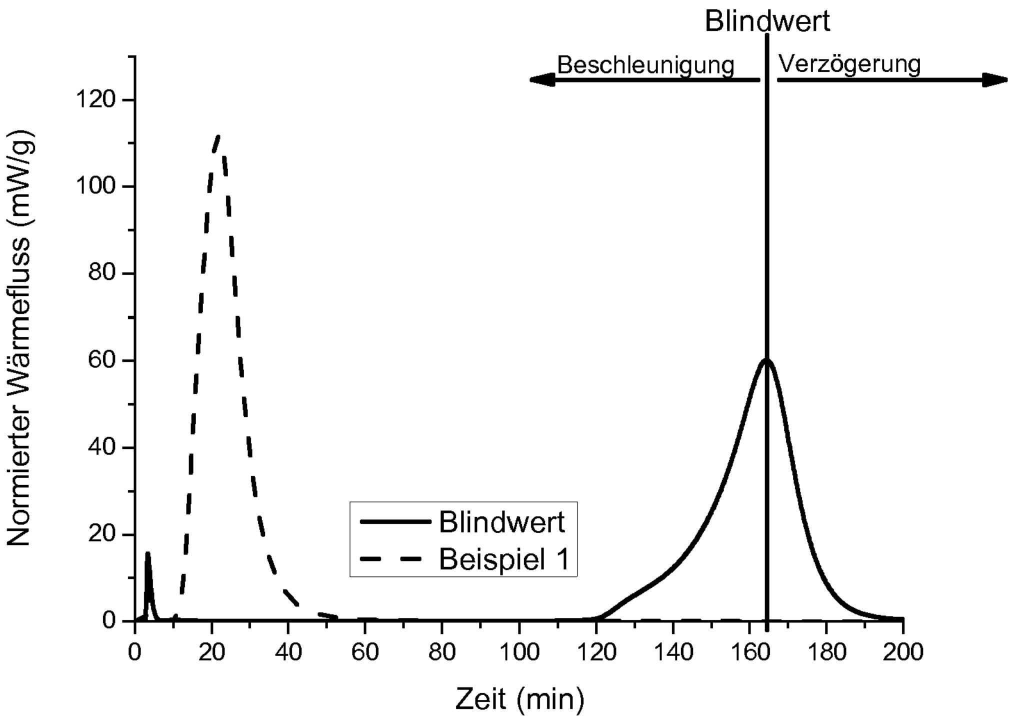


Abbildung 1. Typische Wärmeflusskurven des verzögerten Blindsystems ohne Beschleuniger (durchgezogene Linie) und des beschleunigten Systems (Beispiel 1, gestrichelte Linie).

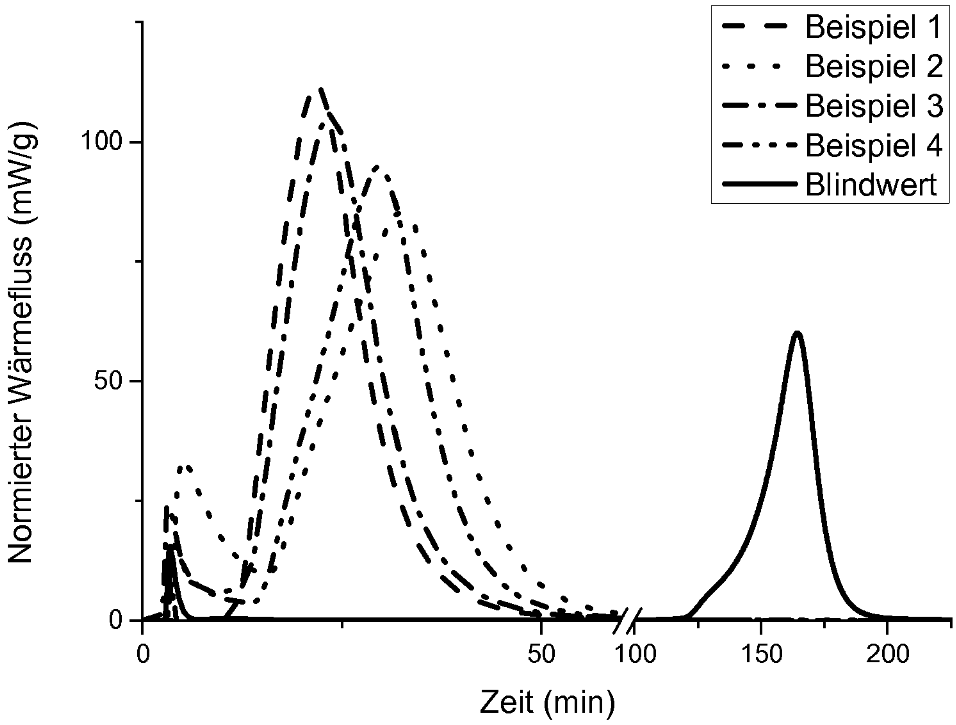


Abbildung 2a. Wärmefluss-Kurven der Proben aus den Beispielen 1-4, jeweils mit einer Dosierung von 0,5 % Aktivsubstanz bezogen auf Calciumsulfat-Halbhydrat. Im Vergleich der Blindwert ohne Beschleuniger (durchgezogene Linie).

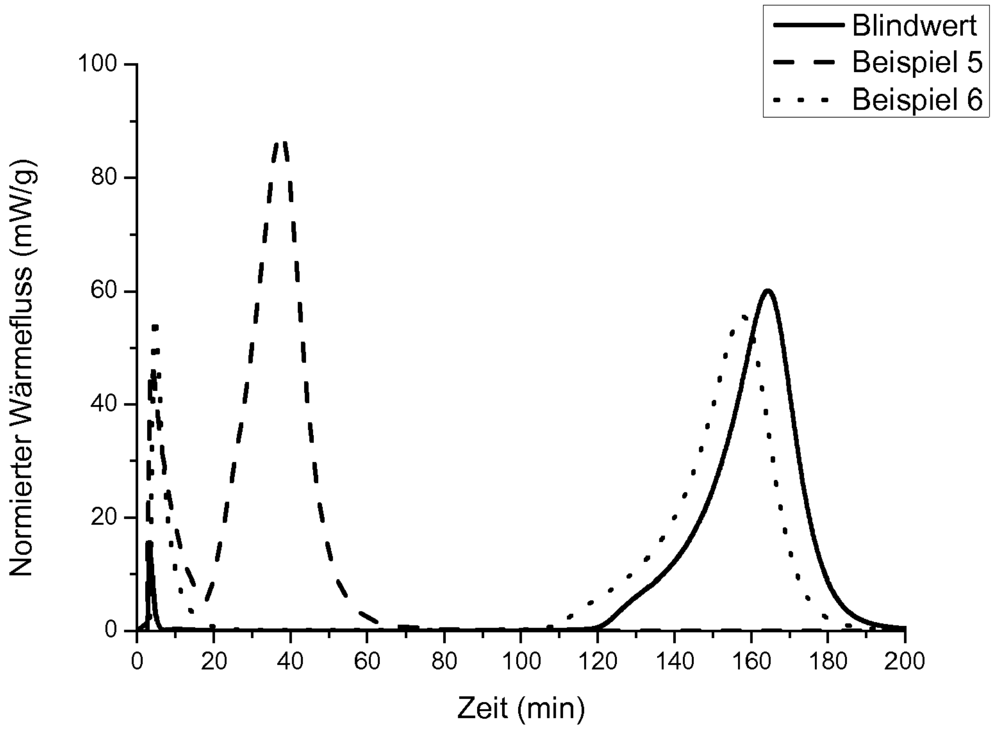


Abbildung 2b. Wärmefluss-Kurven der Proben aus den Beispielen 5 und 6, jeweils mit einer Dosierung von 0,5 % Aktivsubstanz bezogen auf Calciumsulfat-Halbhydrat. Im Vergleich der Blindwert ohne Beschleuniger (durchgezogene Linie).

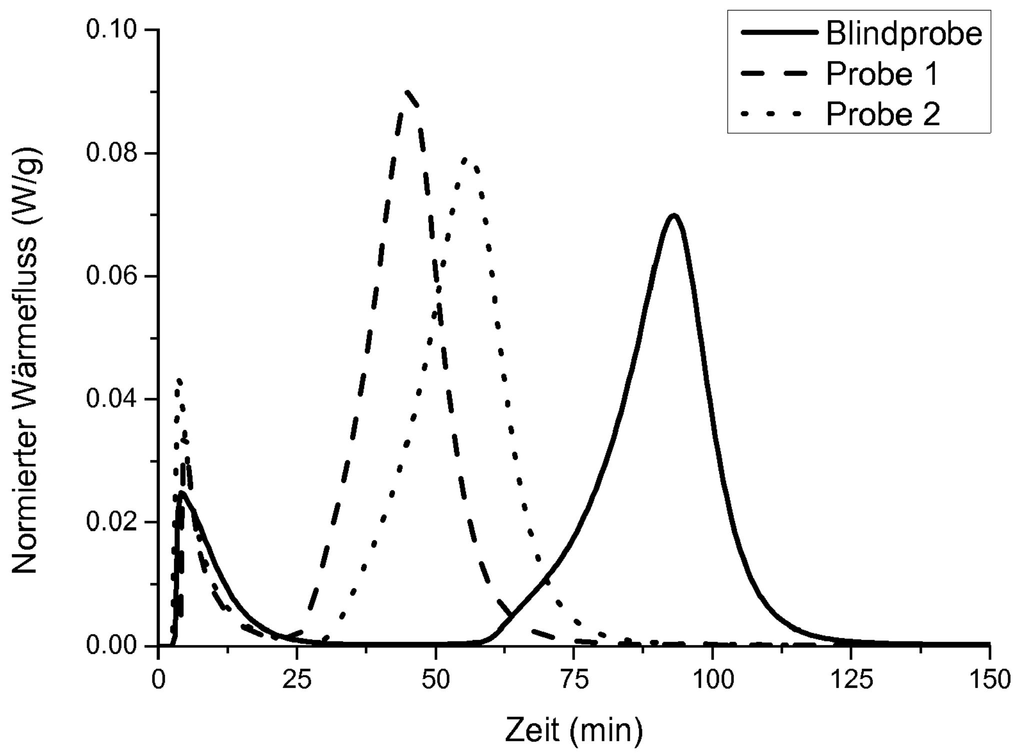


Abbildung 3. Wärmeflusskurven des Blindwerts ohne Beschleuniger (durchgezogene Linie) und zweier Standard-Beschleuniger (Probe 1 und Probe 2) mit einer Dosierung von 0,5 % Aktivsubstanz bezogen auf Calciumsulfat Halbhydrat.

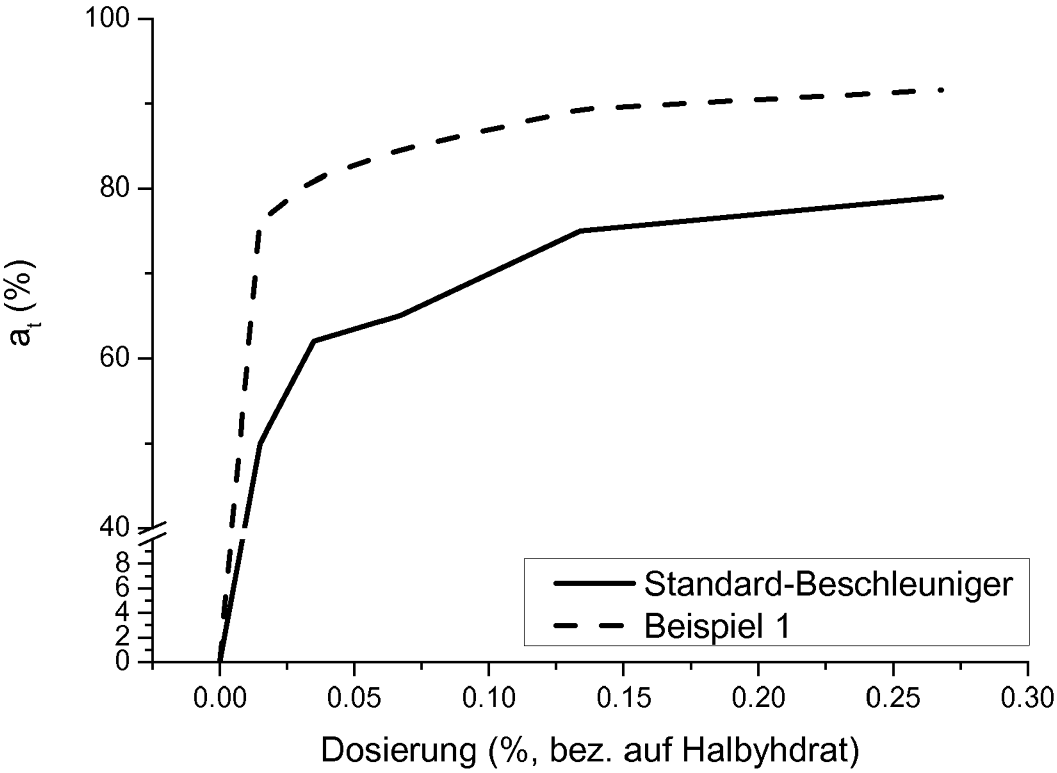


Abbildung 4. Dosierreihe eines Standard-Beschleunigers (Standard-Beschleuniger = Probe 1; durchgezogene Linie) und eines erfindungsgemäß hergestellten Beschleunigers (Beispiel 1, gestrichelte Linie): Verschiebung des Zeitpunkts des maximalen Wärmeflussmaximus ($a_t$).

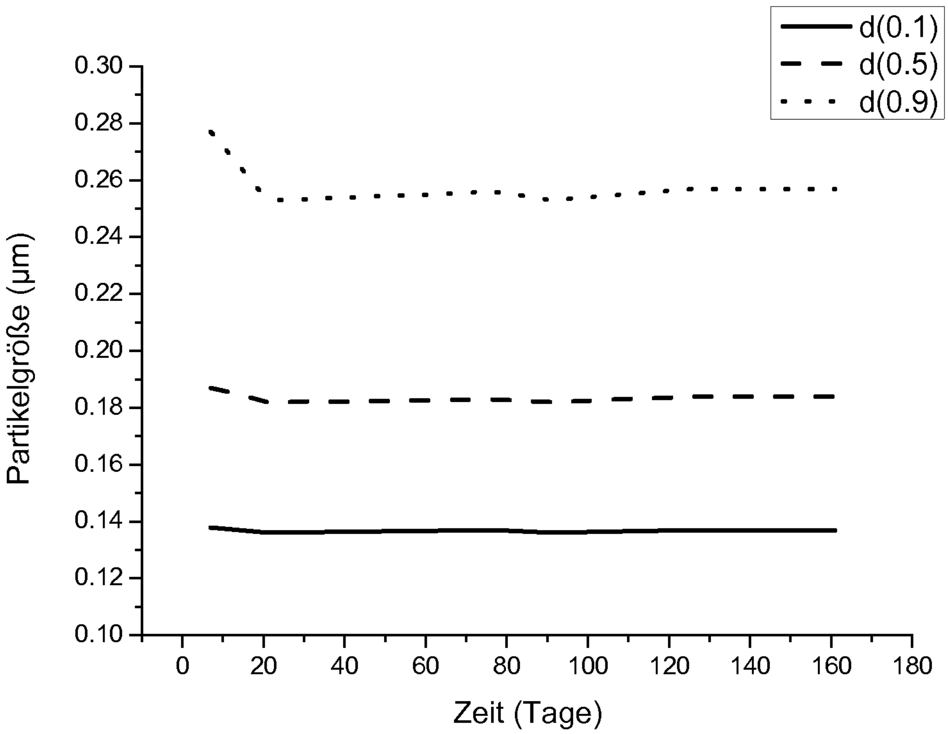


Abbildung 5. Zeitliche Entwicklung der Partikelgrößenverteilungs-Kenngrößen d(0.1), d(0.5) und d(0.9) einer erfindungsgemäß hergestellten Calciumsulfat-Dihydrat-Suspension aus Beispiel 1.

Europäisches Patentamt
European Patent Office
Office européen des brevets

# EUROPÄISCHER RECHERCHENBERICHT

Nummer der Anmeldung
EP 12 17 7315

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | US 6 409 825 B1 (YU QIANG [US] ET AL) 25. Juni 2002 (2002-06-25) * Spalten 2-8 * ----- | 1-15 | INV. C04B22/14 C04B28/14 C04B40/00 C01F11/46 |
| A | DE 10 2005 025719 A1 (SOLVAY INFRA BAD HOENNINGEN GM [DE]) 7. Dezember 2006 (2006-12-07) * Absätze [0024] - [0035] * ----- | 1,2,6-11 | |
| A,D | WO 2005/021632 A1 (SACHTLEBEN CHEMIE GMBH [DE]; AMIRZADEH-ASL DJAMSCHID [DE]) 10. März 2005 (2005-03-10) * das ganze Dokument * ----- | 1-15 | |
| A | WO 2010/026155 A1 (CONSTR RES & TECH GMBH [DE]; NICOLEAU LUC [DE]; JETZLSPERGER EVA [DE];) 11. März 2010 (2010-03-11) * das ganze Dokument * ----- | 1-15 | |
| A | US 2006/278127 A1 (LIU QINGXIA [US] ET AL) 14. Dezember 2006 (2006-12-14) * das ganze Dokument * ----- | 13-15 | RECHERCHIERTE SACHGEBIETE (IPC) |
| A | EP 1 136 507 A1 (SIKA AG [CH] SIKA TECHNOLOGY AG [CH]) 26. September 2001 (2001-09-26) * Anspruch 21 * ----- | 12 | C04B C01F |
| A | US 2009/127360 A1 (TRACY SHARON LOUISE [US] ET AL) 21. Mai 2009 (2009-05-21) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| München | 14. Dezember 2012 | Gattinger, Irene |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

3

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 12 17 7315

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-12-2012

| Im Recherchenbericht angeführtes Patentdokument | Datum der Veröffentlichung | Mitglied(er) der Patentfamilie | Datum der Veröffentlichung |
|---|---|---|---|
| US 6409825 B1 | 25-06-2002 | CA 2355476 A1 | 22-05-2002 |
| | | MX PA01010533 A | 27-05-2002 |
| | | US 6409825 B1 | 25-06-2002 |
| DE 102005025719 A1 | 07-12-2006 | DE 102005025719 A1 | 07-12-2006 |
| | | EP 1891166 A1 | 27-02-2008 |
| | | JP 2008542492 A | 27-11-2008 |
| | | KR 20080018247 A | 27-02-2008 |
| | | US 2008312362 A1 | 18-12-2008 |
| | | WO 2006131500 A1 | 14-12-2006 |
| WO 2005021632 A1 | 10-03-2005 | CN 1839179 A | 27-09-2006 |
| | | DE 10338929 A1 | 24-03-2005 |
| | | EP 1658326 A1 | 24-05-2006 |
| | | TW I359169 B | 01-03-2012 |
| | | US 2007122331 A1 | 31-05-2007 |
| | | WO 2005021632 A1 | 10-03-2005 |
| WO 2010026155 A1 | 11-03-2010 | AU 2009289267 A1 | 11-03-2010 |
| | | CA 2735705 A1 | 11-03-2010 |
| | | CN 102216234 A | 12-10-2011 |
| | | DE 202009017741 U1 | 20-05-2010 |
| | | EP 2321235 A1 | 18-05-2011 |
| | | JP 2012501293 A | 19-01-2012 |
| | | RU 2011112305 A | 10-10-2012 |
| | | TW 201016629 A | 01-05-2010 |
| | | US 2011269875 A1 | 03-11-2011 |
| | | WO 2010026155 A1 | 11-03-2010 |
| US 2006278127 A1 | 14-12-2006 | BR PI0612040 A2 | 13-10-2010 |
| | | CN 101203466 A | 18-06-2008 |
| | | JP 2008543716 A | 04-12-2008 |
| | | NZ 562971 A | 24-12-2010 |
| | | US 2006278127 A1 | 14-12-2006 |
| | | US 2006278130 A1 | 14-12-2006 |
| | | US 2010056655 A1 | 04-03-2010 |
| | | US 2011213043 A1 | 01-09-2011 |
| | | WO 2006138000 A2 | 28-12-2006 |
| EP 1136507 A1 | 26-09-2001 | AT 557046 T | 15-05-2012 |
| | | CA 2340515 A1 | 22-09-2001 |
| | | DE 1136507 T1 | 18-04-2002 |
| | | EP 1136507 A1 | 26-09-2001 |
| | | ES 2164619 T1 | 01-03-2002 |
| | | GR 2001300068 T1 | 31-12-2001 |
| | | JP 3740023 B2 | 25-01-2006 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 12 17 7315

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-12-2012

| Im Recherchenbericht angeführtes Patentdokument | Datum der Veröffentlichung | Mitglied(er) der Patentfamilie | Datum der Veröffentlichung |
|---|---|---|---|
| | | JP 2002003256 A | 09-01-2002 |
| | | US 2001053804 A1 | 20-12-2001 |
| US 2009127360 A1 | 21-05-2009 | CA 2705309 A1 | 22-05-2009 |
| | | CN 101868430 A | 20-10-2010 |
| | | CO 6310988 A2 | 22-08-2011 |
| | | EP 2209749 A1 | 28-07-2010 |
| | | JP 2011504444 A | 10-02-2011 |
| | | RU 2010121233 A | 20-12-2011 |
| | | US 2009127360 A1 | 21-05-2009 |
| | | WO 2009064602 A1 | 22-05-2009 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4009062 A
- WO 2005021632 A
- WO 2006042709 A
- WO 2010040612 A